# EUROPEAN PATENT APPLICATION

(11) **EP 4 439 142 A1**
(43) Date of publication of application: **02.10.2024**
(21) Application number: 24163628.1
(22) Date of filing: 14.03.2024
(51) Int. Cl.: G02B 6/38

(54) **COUPLING OPTICAL FIBERS AND FLUID PASSAGES**

(30) Priority: 14.03.2023 US 202318121424
(71) Applicant: RTX Corporation, Farmington, CT 06032 (US)
(72) Inventor: HACKETT, Bryan J., Berlin, 06037 (US); WARREN, Eli, Wethersfield, 06109 (US)
(74) Representative: Dehns

(57) **Abstract**

An optical system (20) is provided that includes a first conduit (22A), a second conduit (228) and a conduit coupler (24). The first conduit (22A) includes a first optics line (28A) and a first fluid passage (44A) extending longitudinally along the first optics line (28A). The second conduit (228) includes a second optics line (288) and a second fluid passage (44B) extending longitudinally along the second optics line (28B). The conduit coupler (24) removably connects the first conduit (22A) to the second conduit (228) at an interface within the conduit coupler (24). The first optics line (28A) is optically coupled to the second optics line (288) at the interface. The first fluid passage (44A) is fluidly coupled with the second fluid passage (44B) at the interface.

## Description

### Technical Field

This disclosure relates generally to optics and, more particularly, to a coupler for coupling optical fibers.

### Background

Optical fibers may be used for various applications including transmitting light signals for an optical probe. Optical fibers may be optically coupled together by an optical coupler. Various types and configurations of optical couplers are known in the art. While these known optical couplers have various benefits, there is still room in the art for improvement. There is a need in the art, for example, for an optical coupler which can provide improve light transmission between optical fibers as well as facilitate cooling for the optical fibers.

### SUMMARY

According to an aspect of the present invention, an optical system is provided that includes a first conduit, a second conduit and a conduit coupler. The first conduit includes a first optics line and a first fluid passage extending longitudinally along the first optics line. The second conduit includes a second optics line and a second fluid passage extending longitudinally along the second optics line. The conduit coupler removably connects the first conduit to the second conduit at an interface within the conduit coupler. The first optics line is optically coupled to the second optics line at the interface. The first fluid passage is fluidly coupled with the second fluid passage at the interface.

According to another aspect of the present invention, another optical system is provided that includes a first conduit, a second conduit and a conduit coupler. The first conduit includes a first optics line and a first fluid passage. The second conduit includes a second optics line and a second fluid passage. The conduit coupler is configured to optically couple the first optics line to the second optics line. The conduit coupler is configured to fluidly couple the first fluid passage to the second fluid passage. The conduit coupler includes a first connector and a second connector. The first connector includes a first bore and a first port radially outboard of the first bore. The first optics line is received in the first bore. The first port is fluidly coupled with the first fluid passage. The second connector includes a second bore and a second port radially outboard of the second bore. The second optics line is received in the second bore. The second port is fluidly coupled with the second fluid passage and aligned with the first port.

According to still another aspect of the present invention, another optical system is provided that includes a first conduit, a second conduit and a conduit coupler. The first conduit includes a first optics line and a first fluid passage extending longitudinally along and circumferentially about the first optics line. The second conduit includes a second optics line and a second fluid passage extending longitudinally along and circumferentially about the second optics line. The conduit coupler includes an insert and a nut threaded onto the insert. The first conduit projects longitudinally into the insert. The second conduit projects longitudinally through an endwall of the nut into the insert. The conduit coupler optically couples the first optics line to the second optics line at an interface within the insert. The conduit coupler fluidly couples the first fluid passage to the second fluid passage at the interface within the insert.

The conduit coupler may also include a seal element engaged with and longitudinally between the first connector and the second connector.

The first optics line may include a plurality of first optical fibers. The second optics line may include a plurality of second optical fibers. Each of the first optical fibers may be optically coupled to a respective one of the second optical fibers at the interface.

The conduit coupler may be configured to align an end of each of the first optical fibers to an end of the respective one of the second optical fibers at the interface.

Each of the first optical fibers may be coaxial with the respective one of the second optical fibers at the interface.

An end of each of the first optical fibers may laterally overlap at least ninety percent of an end of the respective one of the second optical fibers at the interface.

The first optics line may also include a first optical sheath circumscribing and extending longitudinally along the first optical fibers. The first optical sheath may be between the first optical fibers and the first fluid passage. The second optics line may also include a second optical sheath circumscribing and extending longitudinally along the second optical fibers. The second optical sheath may be between the second optical fibers and the second fluid passage.

The first fluid passage may circumscribe the first optics line. The second fluid passage may circumscribe the second optics line.

The conduit coupler may include a first connector and a second connector longitudinally adjacent the first connector. The first optics line may be mated with the first connector. The first connector may include a first port fluidly coupled with the first fluid passage. The second optics line may be mated with the second connector. The second connector may include a second port fluidly coupled with the second fluid passage. The first fluid passage may be fluidly coupled to the second fluid passage sequentially through the first port and the second port.

The first port may be one of a plurality of first ports in the first connector and fluidly coupled with the first fluid passage. The second port may be one of a plurality of second ports in the second connector and fluidly coupled with the second fluid passage. The conduit coupler may be configured to align each of the first ports with a respective one of the second ports at the interface.

The first optics line may project longitudinally into a first bore of the first connector. The first ports may be arranged circumferentially about the first bore. The second optics line may project longitudinally into a second bore of the second connector. The second ports may be arranged circumferentially about the second bore.

The first conduit may also include a first fluid tube forming an outer periphery of the first fluid passage. The first optics line may project longitudinally out of the first fluid tube and into a first bore of the first connector. The first fluid tube may project longitudinally into a first counterbore of the first connector. The second conduit may also include a second fluid tube forming an outer periphery of the second fluid passage. The second optics line may project longitudinally out of the second fluid tube and into a second bore of the second connector. The second fluid tube may project longitudinally into a second counterbore of the second connector.

The first conduit may be bonded to the first connector. The second conduit may be bonded to the second conduit.

The first connector and the second connector may be rotationally fixed within the conduit coupler.

The conduit coupler may also include a seal element engaged with and longitudinally between the first connector and the second connector.

The first connector may include a first connector groove. The second connector may include a second connector groove. The conduit coupler may include a key arranged in the first connector groove and the second connector groove.

The conduit coupler may also include an insert and a nut threaded onto the insert. The first optics line may project into the insert. The second optics line may project through an endwall of the nut and into the insert. The insert may include an insert groove. The key may also be arranged in the insert groove.

The optical system may also include an optical probe and a fluid source. The optical probe may include the first optics line or the second optics line. The fluid source may be fluidly coupled to the optical probe through the first fluid passage and/or the second fluid passage.

The optical system may also include a light source optically coupled to the first optics line or the second optics line.

The optical system may also include a light sensor optically coupled to one of the first optics line or the second optics line.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side illustration of an optical system.
FIG. 2 is a partial sectional illustration of the optical system.
FIG. 3 is a partial sectional illustration of a conduit with optical fibers and a cooling and/or purge fluid passage.
FIG. 4 is a cross-sectional illustration of the conduit.
FIG. 5 is a perspective illustration of a conduit connector attached to an end portion of the conduit.
FIG. 6 is a sectional illustration of the conduit connector.
FIG. 7 is a sectional illustration of a coupler insert.
FIG. 8 is a cross-sectional illustration of a portion of a conduit coupler at a coupler key.
FIG. 9 is a sectional illustration of a coupler nut.
FIG. 10 is a sectional illustration of a portion of the optical system at an interface between conduits within the conduit coupler.
FIG. 11 is a schematic illustration depicting misalignment between optical fibers.
FIG. 12 is a schematic illustration of the optical system configured as a measurement system with an optical probe monitoring an engine.
FIG. 13 is a schematic illustration of the measurement system configured with multiple of the optical probes.

### DETAILED DESCRIPTION

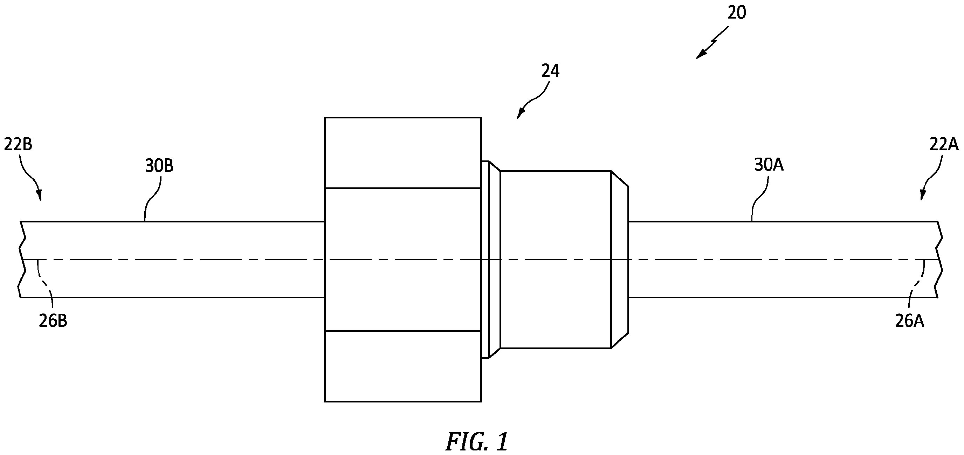

FIG. 1 illustrates a portion of an optical system 20. This optical system 20 includes a first conduit 22A, a second conduit 22B and a conduit coupler 24 configured to removably (e.g., severably) connect the first conduit 22A to the second conduit 22B.

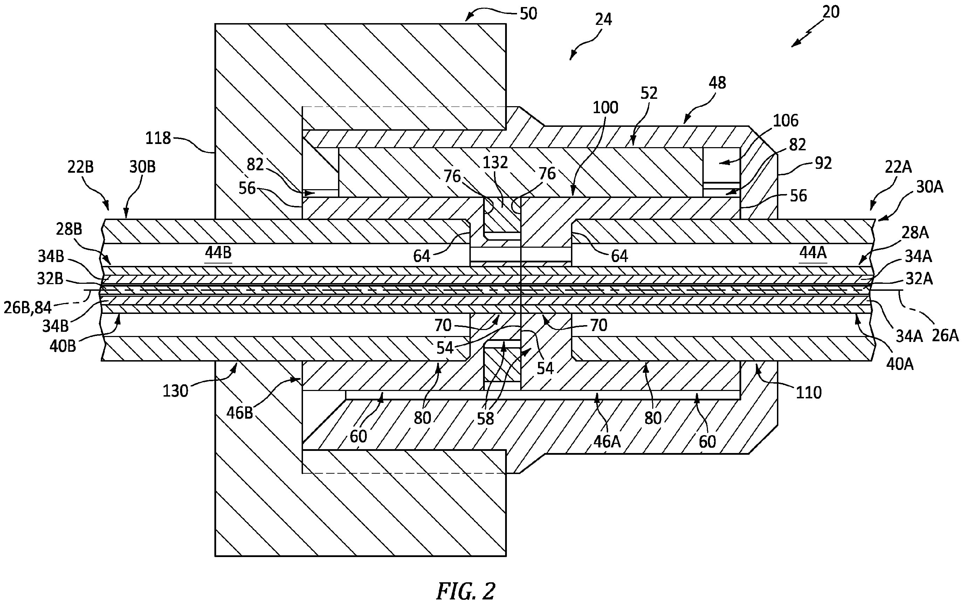

Referring to FIG. 2, each of the conduits 22A, 22B (generally referred to as "22") extends longitudinally along a longitudinal centerline 26A, 26B (generally referred to as "26") of the respective conduit 22 to a distal end of the respective conduit 22. Each conduit 22 may be configured as an optical-fluid conduit and/or a fluid-cooled optical conduit. Each conduit 22A, 22B of FIG. 2, for example, includes an optics line 28A, 28B (generally referred to as "28") and a cooling and/or purge fluid tube 30A, 30B (generally referred to as "30").

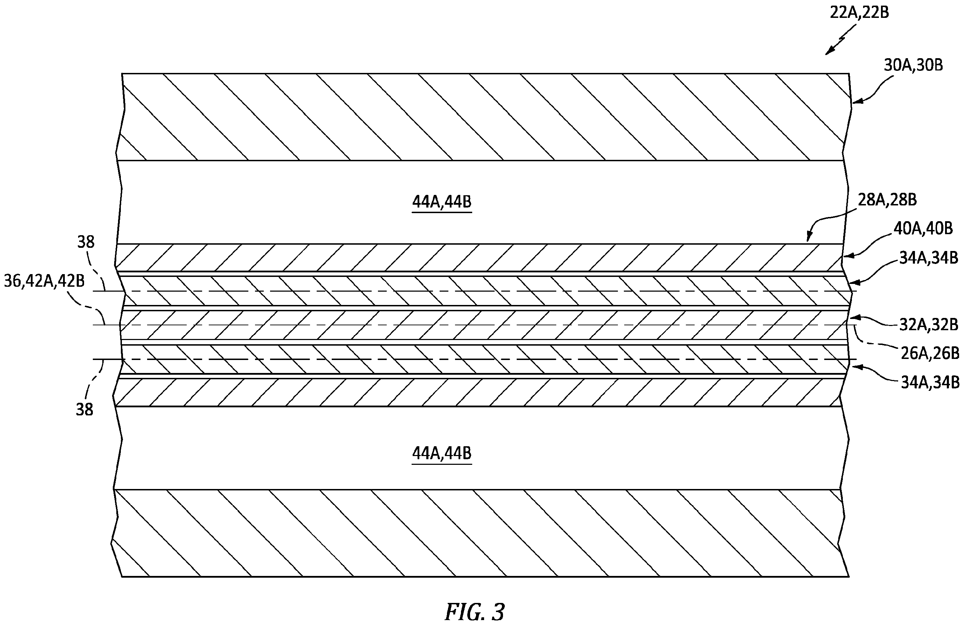

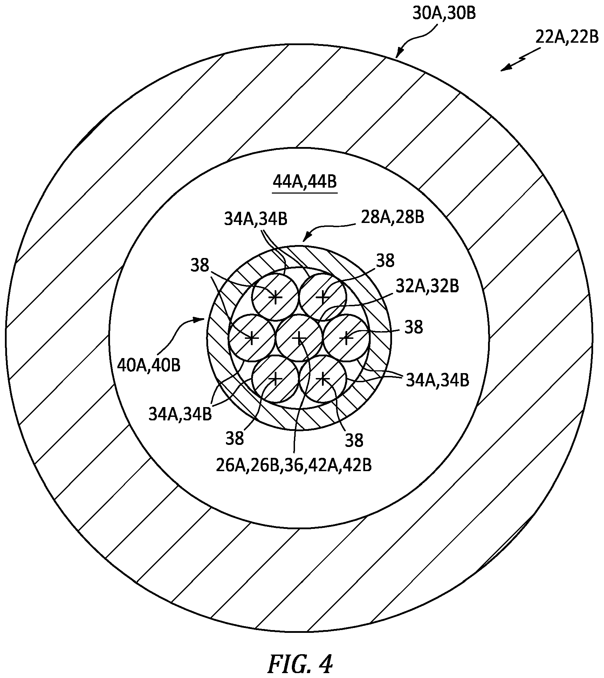

Referring to FIG. 3, each optics line 28 is configured as a longitudinally extending line (e.g., cable, conduit, etc.) of optical members. The optics line 28A, 28B of FIG. 3, for example, includes a bundle (e.g., a grouping) of multiple optical fibers 32A, 32B (generally referred to as "32") and 34A, 34B (generally referred to as "34"). Referring to FIG. 4, one of the optical fibers 32 may be centrally located within the bundle and referred to as a central optical fiber. The remaining optical fibers 34 may be located about a periphery of the central optical fiber 32 and referred to as peripheral optical fibers. Referring to FIG. 3, each optics line 28 extends longitudinally along a longitudinal centerline of the respective optics line 28, which line centerline may be parallel with (e.g., coaxial with) the respective conduit centerline 26. Within the optics line 28, each of the optical fibers 32, 34 extends longitudinally along a longitudinal centerline 36, 38 of the respective optical fiber 32, 34. The longitudinal centerline 36 of the central optical fiber 32 may be coaxial with the respective conduit centerline 26. The peripheral optical fibers 34 of FIGS. 3 and 4 extend longitudinally along and are distributed circumferentially about the central optical fiber 32 in a circular array. The longitudinal centerlines 38 of the peripheral optical fibers 34 may be parallel with (but, radially spaced out from) the longitudinal centerline 26, 36. Within the bundle of FIG. 4, the central optical fiber 32 may radially engage (e.g., contact) and/or be positioned radially adjacent each of the peripheral optical fibers 34. Each of the peripheral optical fibers 34 may be disposed circumferentially between and may circumferentially engage a set of circumferentially neighboring (e.g., adjacent) peripheral optical fibers 34. The present disclosure, however, is not limited to the foregoing exemplary arrangement of the optical fibers within the bundle / the optics line 28. The respective optics line 28, for example, may include multiple of the central optical fibers 32 surrounded by the peripheral optical fibers 34.

Each optics line 28A, 28B may also include an optical sheath 40A, 40B (generally referred to as "40") such as, but not limited to, hypo-tubing, insulative tubing, non-transparent tubing or the like. Referring to FIG. 2, the optical sheath 40 extends longitudinally along at least a portion of the respective optics line 28 external to the conduit coupler 24. The optical sheath 40 may also extend longitudinally along at least a portion or all of the respective optics line 28 internal to the conduit coupler 24. The optical sheath 40 of FIG. 4 extends circumferentially about (e.g., completely around) the bundle of the optical fibers 32 and 34. The optical sheath 40 may thereby circumscribe and completely house, shield, protect and/or otherwise cover a select longitudinal length of the bundle of the optical fibers 32 and 34.

Referring to FIG. 3, the fluid tube 30A, 30B extends longitudinally along a longitudinal centerline 42A, 42B (generally referred to as "42") of the respective fluid tube 30A, 30B, which tube centerline 42 may be parallel with (e.g., coaxial with) the respective conduit centerline 26. The fluid tube 30 of FIG. 3 is mated with the respective optics line 28. More particularly, the optics line 28 of FIG. 3 is arranged in and extends longitudinally in (e.g., through) the fluid tube 30, where the line centerline may be parallel with (e.g., coaxial with) the respective tube centerline 42. Referring to FIG. 4, the fluid tube 30 extends circumferentially around (e.g., circumscribed) the respective optics line 28. A tubular sidewall of the fluid tube 30 is spaced radially outward from the respective optics line 28A, 28B forming a cooling and/or purge fluid passage 44A, 44B (generally referred to as "44") within the respective fluid tube 30, and radially between (a) the respective fluid tube 30 and its sidewall and (b) the respective optics line 28 and its optical sheath 40. This fluid passage 44 extend circumferentially about (e.g., completely around) the respective optics line 28; however, the present disclosure is not limited to such an exemplary arrangement. Referring to FIG. 3, the fluid passage 44 extends longitudinally within the respective fluid tube 30 and longitudinally along (and outside of) the respective optics line 28 and its optical sheath 40.

The conduit coupler 24 of FIG. 2 includes a plurality of conduit connectors 46A, 46B (generally referred to as "46") (e.g., conduit end fittings) respective arranged with the conduits 22A and 22B. This conduit coupler 24 includes a coupler insert 48 (e.g., a coupler bolt) and a coupler nut 50, where at least (or only) the coupler insert 48 and the coupler nut 50 collectively form a housing structure for an interface between the conduits 22A and 22B. Briefly, this conduit interface includes an optical interface between (a) the first optics line 28A and its first optical fibers 32A and 34A and (b) the second optics line 28B and its second optical fibers 32B and 34B. The conduit interface also includes a fluid interface between the (a) the first fluid tube 30A and its first fluid passage 44A and (b) the second fluid tube 30B and its second fluid passage 44B. The conduit coupler 24 may be configured as an indexed conduit coupler for rotationally aligning the first conduit 22A with the second conduit 22B at the conduit interface. The conduit coupler 24 of FIG. 2, for example, also includes a coupler key 52 (e.g., a dowl pin) for mating with the conduit connectors 46 and the coupler insert 48.

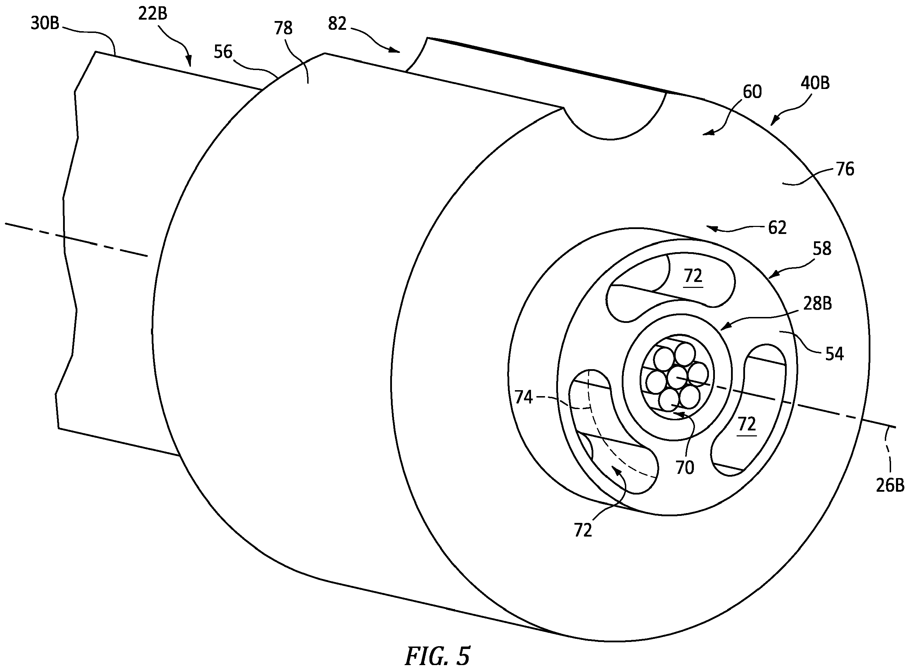

Referring to FIG. 5, each conduit connector 46 extends longitudinally along the conduit centerline 26 between and to a face end 54 of the respective conduit connector 46 and a base end 56 of the respective conduit connector 46, which conduit centerline 26 may also be a longitudinal centerline of the conduit connector 46. Each conduit connector 46 includes an inner sidewall 58, an outer sidewall 60 and an intermediate wall 62 (e.g., web, flange, etc.) radially between the inner sidewall 58 and the outer sidewall 60.

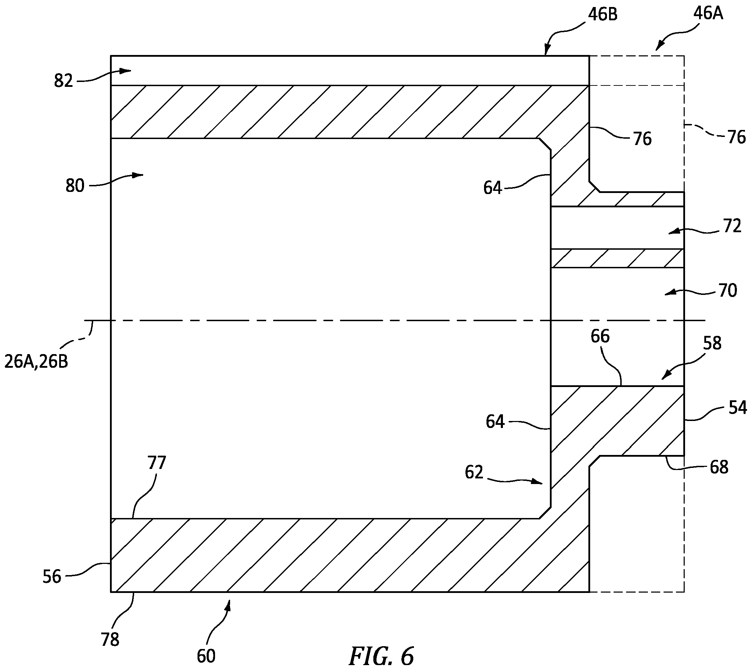

Referring to FIG. 6, the inner sidewall 58 extends longitudinally along the conduit centerline 26 from an (e.g., annular) internal shelf 64 within the conduit coupler 24 to the connector face end 54. The inner sidewall 58 extends radially between and to an inner side 66 of the inner sidewall 58 and an outer side 68 of the inner sidewall 58. The inner sidewall 58 extends circumferentially around (e.g., circumscribes) the conduit centerline 26 providing the inner sidewall 58 with a full-hoop tubular geometry. With this arrangement, the inner sidewall 58 forms a bore 70 within the conduit connector 46. This bore 70 extends longitudinally along the conduit centerline 26 between and to the shelf 64 and the connector face end 54. The bore 70 projects radially out from the conduit centerline 26 to the inner sidewall inner side 66. The bore 70 is configured as a receptacle for an end portion of the respective optics line 28 as described below in further detail.

The inner sidewall 58 of FIG. 5 also includes one or more cooling and/or purge fluid ports 72. These ports 72 are radially outboard of the bore 70 and, thus, the respective optics line 28 received within the bore 70. The ports 72 are arranged circumferentially about the conduit centerline 26, the bore 70 and/or the respective optics line 28 in an array; e.g., a circular array. Each port 72 extends laterally (e.g., circumferentially) within the inner sidewall 58 along a lateral centerline 74 (e.g., major axis centerline) of the respective port 72 between opposing lateral sides of the port 72. This lateral centerline 74 may be curved; e.g., arcuate with a uniform radius to the conduit centerline 26. Each port 72 extends radially within the inner sidewall 58 (e.g., along a minor axis centerline) between opposing radial sides of the port 72. A lateral width of each port 72 may be greater than a radial height of that port 72 providing the port 72 with an elongated cross-sectional geometry; e.g., each port 72 may be a slot. Furthermore, a lateral distance between laterally adjacent ports 72 may be sized smaller than the lateral width. The present disclosure, however, is not limited to such an exemplary arrangement. Referring to FIG. 6, each port 72 extends longitudinally along the conduit centerline 26 through the inner sidewall 58 from the shelf 64 to the connector face end 54.

The outer sidewall 60 of FIG. 6 extends longitudinally along the conduit centerline 26 from the connector base end 56 to a (e.g., annular) seal land 76. The seal land 76 of FIG. 6 is longitudinally recessed (e.g., spaced) from the connector face end 54. However, the seal land 76 may alternatively be disposed at the connector face end 54; e.g., see first connector 46A of FIG. 2. The outer sidewall 60 extends radially between and to an inner side 77 of the outer sidewall 60 and an outer side 78 of the outer sidewall 60. Here, the outer sidewall inner side 77 has a greater diameter than the inner sidewall inner side 66. Similarly, the outer sidewall outer side 78 has a greater diameter than the inner sidewall outer side 68. The outer sidewall 60 extends circumferentially around (e.g., circumscribes) the conduit centerline 26 providing the outer sidewall 60 with a full-hoop tubular geometry. With this arrangement, the outer sidewall 60 forms a counterbore 80 within the conduit connector 46. This counterbore 80 projects longitudinally along the conduit centerline 26 into the conduit connector 46 from the connector base end 56 to the bore 70 and the shelf 64. The counterbore 80 projects radially out from the conduit centerline 26 to the outer sidewall inner side 77. The counterbore 80 is configured as a receptacle for an end portion of the respective fluid tube 30 as described below in further detail.

The outer sidewall 60 of FIG. 5 also includes a (e.g., single) connector groove 82. This connector groove 82 extends longitudinally along the conduit centerline 26 through the outer sidewall 60 from the connector base end 56 to the seal land 76. The connector groove 82 extends laterally (e.g., circumferentially) within the outer sidewall 60 between and to opposing lateral sides of the connector groove 82. The connector groove 82 projects radially into the outer sidewall 60 from the outer sidewall outer side 78 (also an outer side of the conduit connector 46) to an inner end of the connector groove 82. The connector groove 82 has a cross-sectional geometry when viewed in a reference plane perpendicular to the conduit centerline 26. This cross-sectional geometry may have a partial circular (e.g., half circle, third circle, etc.) shape; however, the present disclosure is not limited to such an exemplary arrangement.

The intermediate wall 62 of FIG. 6 projects radially out from the inner sidewall 58 to the outer sidewall 60. The intermediate wall 62 is connected to (e.g., formed integral with) the inner sidewall 58 and the outer sidewall 60. The intermediate wall 62 extends longitudinally along the conduit centerline 26 between and to the shelf 64 and the seal land 76. Referring to FIG. 5, the intermediate wall 62 extends circumferentially around the conduit centerline 26. The intermediate wall 62 thereby circumscribes a portion of the inner sidewall 58, and the outer sidewall 60 circumscribes the intermediate wall 62.

Referring to FIG. 2, each optics line 28 and its optical fibers 32 and 34 are mated with the respective conduit connector 46. The end portion of each optics line 28, for example, may be inserted into the respective conduit connector 46. More particularly, the end portion of each optics line 28 is inserted longitudinally into the respective bore 70, where an end of the optical sheath 40 and/or ends of the optical fibers 32 and 34 are disposed at and may be longitudinally aligned with the respective connector face end 54. The optical fibers 32 and 34 may be fixed (e.g., bonded to) the optical sheath 40, and the optical sheath 40 may be fixed (e.g., bonded to) the respective conduit connector 46 and its inner sidewall 58.

Referring to FIG. 5, the optics line 28 and its optical fibers 32 and 34 may be arranged with the respective conduit connector 46 in a select manner; e.g., a known, predetermined manner. More particularly, the optical fibers 34 may be rotationally clocked about the conduit centerline 26 in the select manner. A circumferential center of the connector groove 82 of FIG. 5, for example, may be circumferentially aligned with (e.g., located on a common ray out from the conduit centerline 26 as) a point of engagement between (or a gap) between a circumferentially neighboring (e.g., adjacent) pair of the optical fibers 34. Alternatively, the circumferential center of the connector groove 82 may be circumferentially aligned with the longitudinal centerline of one of the optical fibers 34. The present disclosure, however, is not limited to the foregoing exemplary arrangements. While the specific arrangement of the optical fibers 32 and 34 may vary and the relative location of those optical fibers 32 and 34 relative to the conduit connector 46 may vary, these arrangements in general should be the same for each set of optical fibers 32 and 34 and its associated conduit connector 46. In other words, the arrangement of the first optical fibers 32A and 34A and the first connector 46A in general should match (e.g., be the same as) and/or otherwise compliment (e.g., mirror, etc.) the arrangement of the second optical fibers 32B and 34B and the second connector 46B.

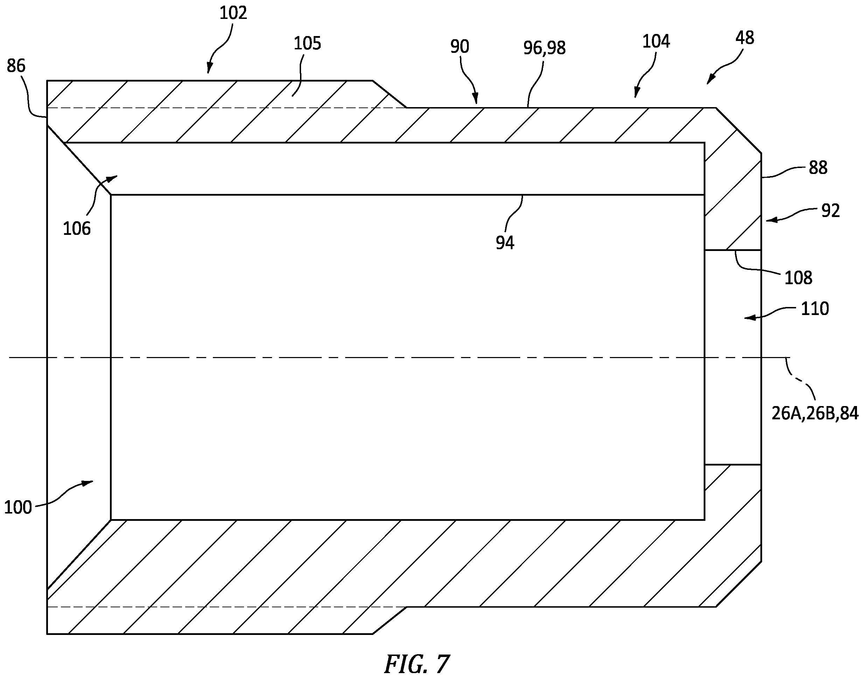

Referring to FIG. 7, the coupler insert 48 extends longitudinally along a longitudinal centerline 84 of the conduit coupler 24 between and to a first end 86 (e.g., a mating end) of the coupler insert 48 and a second end 88 (e.g., a back end) of the coupler insert 48, which coupler centerline 84 may be parallel with (e.g., coaxial with) the conduit centerlines 26 at the conduit interface (see FIG. 2). The coupler insert 48 includes a sidewall 90 and an endwall 92.

The insert sidewall 90 projects longitudinally out from the insert endwall 92 to the insert first end 86. The insert sidewall 90 extends radially between and to an inner side 94 of the insert sidewall 90 and an outer side 96 of the insert sidewall 90, which insert sidewall outer side 96 may also be an outer side 98 of the coupler insert 48. The insert sidewall 90 extends circumferentially around (e.g., circumscribes) the coupler centerline 84 providing the insert sidewall 90 with a full-hoop tubular geometry. With this arrangement, the insert sidewall 90 forms an outer periphery of a connector receptacle 100 (e.g., a bore, a cavity, etc.) within the coupler insert 48. This connector receptacle 100 projects longitudinally along the coupler centerline 84 into the coupler insert 48 from the insert first end 86 to the insert endwall 92. The connector receptacle 100 projects radially out from the coupler centerline 84 to the insert sidewall inner side 94. This connector receptacle 100 is configured to receive the conduit connectors 46 (see FIG. 2) as described below in further detail.

A first section 102 of the coupler insert 48 may be threaded, and a second section 104 of the coupler insert 48 may not be threaded. The first section 102 is longitudinally between the insert first end 86 and the second section 104. The first section 102 of FIG. 7, for example, extends longitudinally between and to the insert first end 86 and the second section 104, where threads 105 (schematically shown) of the first section 102 are disposed at the insert sidewall outer side 96. The second section 104 is longitudinally between the insert second end 88 and the first section 102. The second section 104 of FIG. 7, for example, extends longitudinally between and to the insert second end 88 and the first section 102.

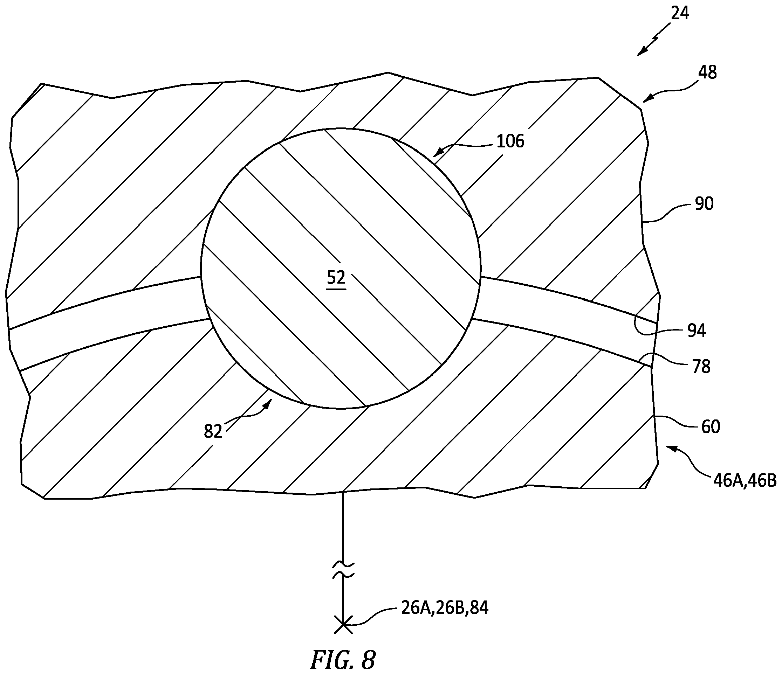

The insert sidewall 90 of FIG. 7 also includes an (e.g., single) insert groove 106. This insert groove 106 extends longitudinally along the coupler centerline 84 through (or into) the insert sidewall 90 from the insert first end 86 to the insert endwall 92. The insert groove 106 projects radially into the insert sidewall 90 from the insert sidewall inner side 94 to an end of the insert groove 106. Referring to FIG. 8, the insert groove 106 extends laterally (e.g., circumferentially) within the insert sidewall 90 between and to opposing lateral sides of the insert groove 106. The insert groove 106 has a cross-sectional geometry when viewed in a reference plane perpendicular to the coupler centerline 84. This cross-sectional geometry may have a partial circular (e.g., half circle, third circle, etc.) shape; however, the present disclosure is not limited to such an exemplary arrangement.

Referring to FIG. 7, the insert endwall 92 is disposed at the insert second end 88. The insert endwall 92 of FIG. 7, for example, extends longitudinally between and to the insert sidewall 90 and the insert second end 88. The insert endwall 92 extends radially between and to an inner side 108 of the insert endwall 92 and the insert outer side 98. The insert endwall 92 extends circumferentially around (e.g., circumscribes) the coupler centerline 84 providing the insert sidewall 90 with an annular geometry. With this arrangement, the insert endwall 92 is configured with an aperture 110; e.g., a bore, a through-hole, etc. The insert endwall aperture 110 projects longitudinally through the insert endwall 92 to the connector receptacle 100.

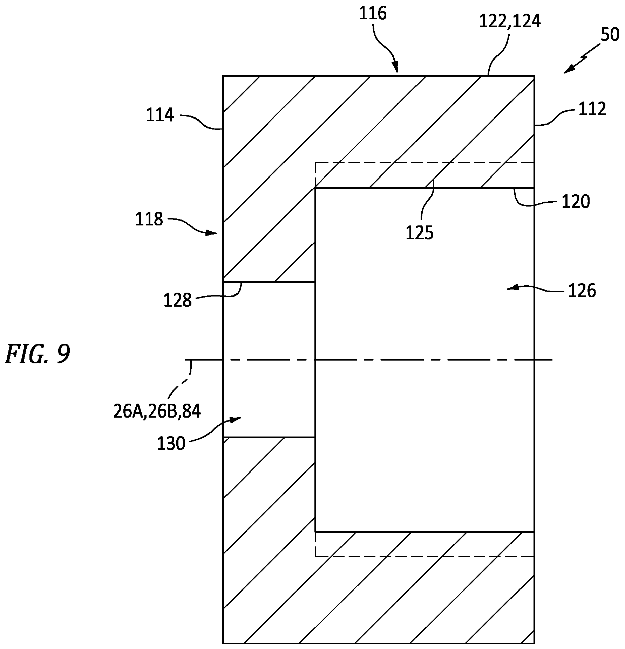

Referring to FIG. 9, the coupler nut 50 extends longitudinally along the coupler centerline 84 between and to a first end 112 (e.g., a mating end) of the coupler nut 50 and a second end 114 (e.g., a back end) of the coupler nut 50. The coupler nut 50 includes a sidewall 116 and an endwall 118.

The nut sidewall 116 projects longitudinally out from the nut endwall 118 to the nut first end 112. The nut sidewall 116 extends radially between and to an inner side 120 of the nut sidewall 116 and an outer side 122 of the nut sidewall 116, which nut sidewall outer side 122 may also be an outer side 124 of the coupler nut 50. At least a portion of the nut sidewall 116 may be threaded, where threads 125 (schematically shown) are disposed at the nut sidewall inner side 120. The nut sidewall 116 extends circumferentially around (e.g., circumscribes) the coupler centerline 84 providing the nut sidewall 116 with a full-hoop tubular geometry. With this arrangement, the nut sidewall 116 forms an outer periphery of an insert receptacle 126 (e.g., a bore, a cavity, etc.) within the coupler nut 50. This insert receptacle 126 projects longitudinally along the coupler centerline 84 into the coupler nut 50 from the nut first end 112 to the nut endwall 118. The insert receptacle 126 projects radially out from the coupler centerline 84 to the nut sidewall inner side 120. This insert receptacle 126 is configured to receive the coupler insert 48 (see FIG. 2) as described below in further detail.

The nut endwall 118 is disposed at the nut second end 114. The nut endwall 118 of FIG. 9, for example, extends longitudinally between and to the nut sidewall 116 and the nut second end 114. The nut endwall 118 extends radially between and to an inner side 128 of the nut endwall 118 and the nut outer side 124. The nut endwall 118 extends circumferentially around (e.g., circumscribes) the coupler centerline 84 providing the nut endwall 118 with an annular geometry. With this arrangement, the nut endwall 118 is configured with an aperture 130; e.g., a bore, a through-hole, etc. The nut endwall aperture 130 projects longitudinally through the nut endwall 118 to the insert receptacle 126.

Referring to FIG. 2, during assembly of the optical system 20, the first conduit 22A with the attached first connector 46A is mated with the coupler insert 48. The first conduit 22A, for example, projects longitudinally through the insert endwall aperture 110. The first connector 46A is nested within the connector receptacle 100. The first connector base end 56 is longitudinally adjacent and may be abutted against (e.g., longitudinally contacts) the insert endwall 92. The first connector 46 and its outer sidewall are radially adjacent and may be abutted against (or slightly spaced from) the coupler insert 48 and its insert sidewall.

The coupler key 52 is mated with the coupler insert 48 and the first connector 46A to rotationally fix the first connector 46A and the attached first conduit 22A and its members 28A and 30A to the coupler insert 48. More particularly, the coupler key 52 is inserted longitudinally into the insert groove 106 and the first connector groove 82.

The second connector 46B is nested within the connector receptacle 100. The second connector face end 54 is longitudinally adjacent and may be abutted against the first connector face end 54 at the conduit interface. An end of the first optics line 28A is longitudinally adjacent and may be abutted against an end of the second optics line 28B. More particularly, ends of the first optical fibers 32A and 34A are respectively longitudinally adjacent and may be abutted against ends of the second optical fibers 32B and 34B at the optical interface. The coupler key 52 is also mated with the second connector 46B to rotationally fix the second connector 46B and the attached second conduit 22B and its members 28B and 30B to the coupler insert 48. More particularly, the coupler key 52 projects longitudinally into the second connector groove 82. Furthermore, an annular seal element 132 (e.g., a ring seal) may be arranged longitudinally between the first connector 46A and the second connector 46B. This seal element 132 of FIG. 1, for example, is longitudinally pressed between the seal lands 76 to facilitate a fluid seal between the conduit connectors 46.

The second conduit 22B is mated with the coupler nut 50. The second conduit 22B, for example, projects longitudinally through the nut endwall aperture 130. The coupler nut 50 is then mated with the coupler insert 48. The coupler nut 50 of FIG. 2, for example, is threaded onto the threaded first section of the coupler insert 48 and torqued as specified, for example, in a design specification. The second connector base end 56 is longitudinally adjacent and may be abutted against the nut endwall 118. With this arrangement, the coupler key 52 is longitudinally captured within the conduit coupler 24.

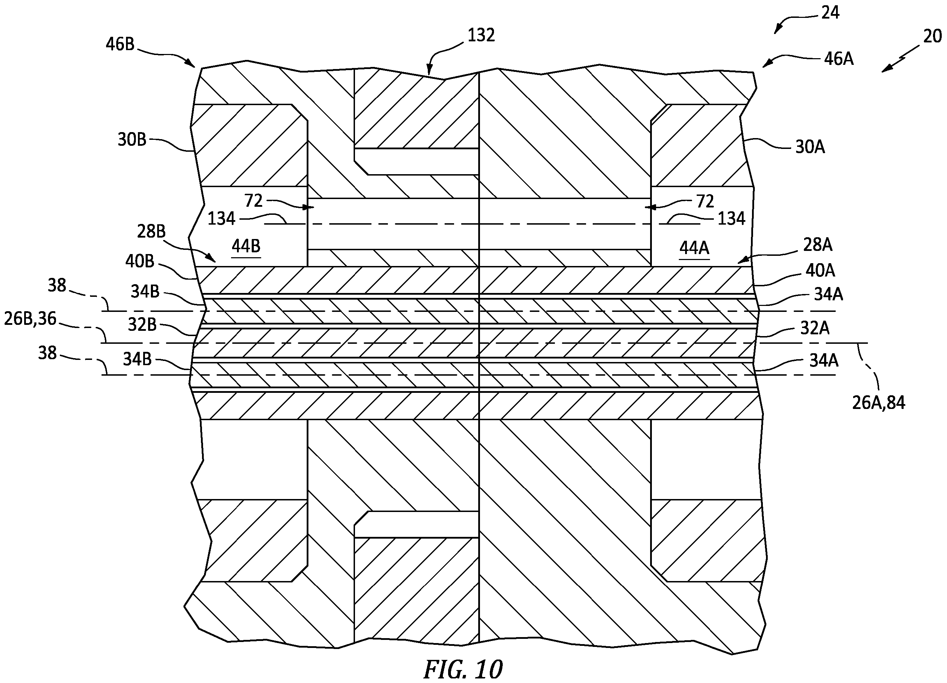

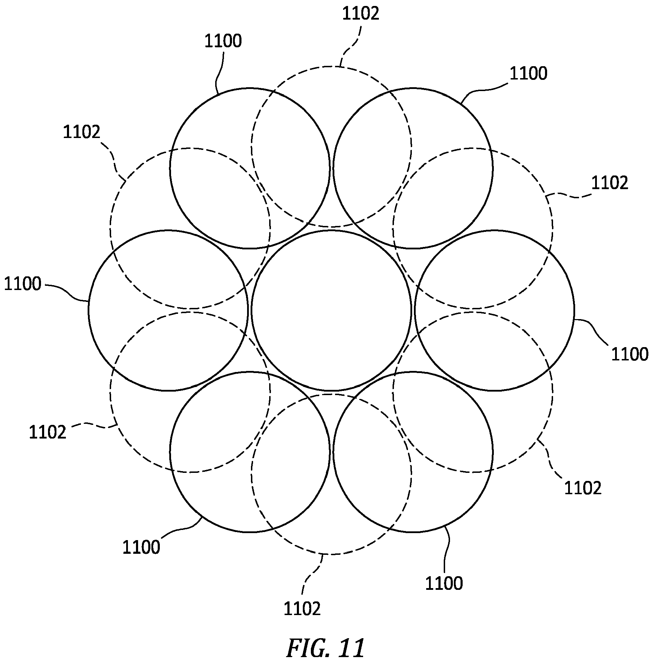

Referring to FIG. 10, following assembly of the optical system 20, each first optical fiber 32A, 34A of the first optics line 28A may be aligned with a respective one of the second optical fibers 32B, 34B of the second optics line 28B. For example, each first optical fiber 32A, 34A and its longitudinal centerline 36, 38 may be substantially or completely coaxial with the respective second optical fiber 32B, 34B and its longitudinal centerline 36, 38. With such an arrangement, the end of each first optical fiber 32A, 34A laterally (e.g., radially and/or circumferentially) overlaps at least ninety percent (90%) or ninety-five percent (95%) of the end of the respective second optical fiber 32B, 34B. Where a set of the optical fibers 32 and 34 are completely aligned, the end of each first optical fiber 32A, 34A may completely (e.g., 100%) laterally overlap the end of the respective second optical fiber 32B, 34B, and vice versa. The alignment between the first optical fibers 32A and 34A and the second optical fibers 32B and 34B may promote enhance light transmission between the first optical fibers 32A, 34A and the second optical fibers 32B and 34B. For example, at least sixty, seventy or even eighty percent (60%, 70% or 80%) of light may be transmitted between a respective set of the optical fibers. By contrast, referring to FIG. 11, where first optical fibers 1100 are (e.g., circumferentially) misaligned from second optical fibers 1102, less than forty or thirty percent (40-30%) of light may be transferred.

Referring to FIG. 10, the conduit connectors 46 and their ports 72 are arranged to fluidly couple the fluid tubes 30 and their fluid passages 44 together through the conduit coupler 24. In particular, each first connector port 72 may be aligned with a respective one of the second connector ports 72. For example, each first connector port 72 and its longitudinal centerline 134 may be substantially or completely coaxial with the respective second connector port 72 and its longitudinal centerline 134. With such an arrangement, each first connector port 72 laterally (e.g., radially and/or circumferentially) overlaps at least ninety percent (90%) or ninety-five percent (95%) of the respective second connector port 72. Where a set of the ports 72 are completely aligned, each first connector port 72 may completely (e.g., 100%) laterally overlap the respective second connector port 72, and vice versa. The alignment between the first connector ports 72 and the second connector ports 72 may promote enhance fluid transmission between the first fluid passage 44A and the second fluid passage 44B at the fluid interface.

The conduit coupler 24 is described above as an indexed conduit coupler which rotationally aligns the first conduit 22A to the second conduit 22B at the conduit interface. It is contemplated, however, the conduit coupler 24 may be implemented without requiring such alignment. The conduit coupler 24, for example, may be configured without the coupler key 52.

The conduit coupler 24 is described above with the seal element 132 between the conduit connectors 46. It is contemplated, however, a sufficient seal may be obtained by pressing the first connector 46A longitudinally against the second connector 46B. Thus, the conduit coupler 24 may be configured without the seal element 132.

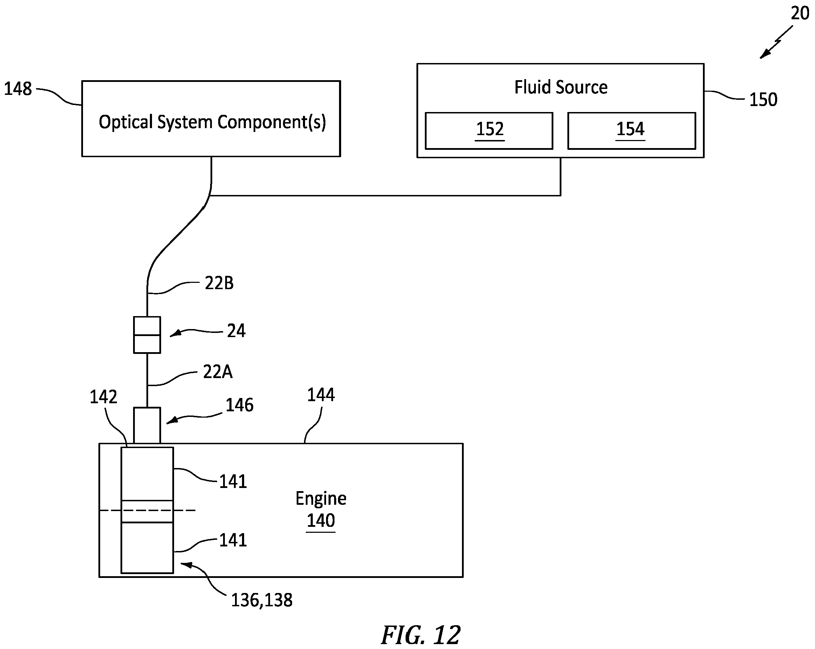

The conduit coupler 24 of FIGS. 1 and 2 may be used for various applications. The optical system 20, for example, may be used for communicating information (e.g., light signals) between various devices; e.g., from a signal transmitter to a signal receiver, between transceivers, etc. The optical system 20 may also or alternatively be used for measuring one or more parameters. The optical system 20 of FIG. 12, for example, is configured for measuring one or more operational parameters of a rotor 136. This rotor 136 may be a bladed rotor 138 for a gas turbine engine 140. Examples of the bladed rotor 138 include, but are not limited to, a propulsor rotor (e.g., a fan rotor), a compressor rotor or any other ducted rotor within and/or rotatably driven by the gas turbine engine. The present disclosure, however, is not limited to measuring operational parameters for a bladed rotor, nor to measuring operational parameters for gas turbine engine applications. The optical system 20 (here, a measurement system), for example, may alternatively be configured to measure one or more operational parameters of any rotor in or coupled to various other types of rotational equipment such as, but not limited to, a reciprocating piston engine, a rotary engine, an electric motor and the like. However, for ease of description, the optical system 20 is described below with reference to the bladed rotor 138.

The operation parameters may include a blade time of arrival (BTOA) for one or more rotor blades 141 of the bladed rotor 138. The blade time of arrival may be indicative of a point in time when a tip 142 (or another portion) of one of the rotor blades 141 arrives at or crosses (e.g., passes) a measurement location; e.g., a probe location. The present disclosure, however, is not limited to such exemplary operational parameters. The operational parameters, for example, may also or alternatively include a blade tip clearance (BTC). The blade tip clearance may be indicative of a (e.g., minimum or average) radial distance between the tip 142 of one of the rotor blades 141 and a duct wall 144 circumscribing and housing the bladed rotor 138.

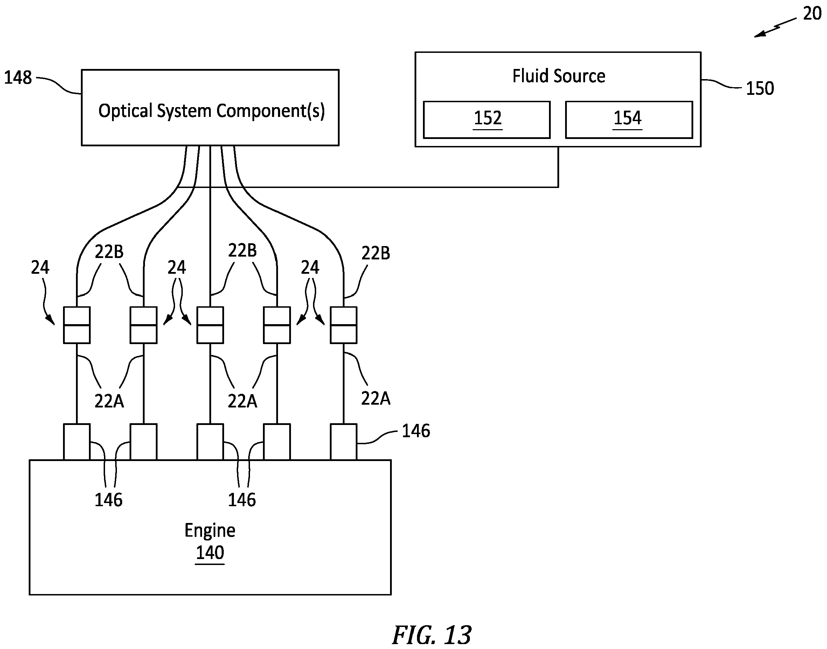

The optical system 20 of FIG. 12 includes an optical probe 146 that is mounted to the wall 144; e.g., a duct wall housing the bladed rotor 138. This optical probe 146 includes the first conduit 22A (or alternatively the second conduit 22B). The optical system 20 of FIG. 12 also includes one or more other optical system components 148. These optical system components 148 are in signal communication with the optical probe 146 through the second conduit 22B (or alternatively the first conduit 22A). Examples of the optical system components 148 include, but are not limited to, a light emission device such as an LED or a laser, a light sensing device such as a light receptor, a processor, etc. Utilizing the conduits 22 and the conduit coupler 24 to optically couple the optical probe 146 to the optical system component(s) 148 may facilitate arranging the optical probe 146 in difficult to reach locations. For example, the optical probe 146 may first be routed, as needed, to mount with the wall 144. Then, the conduit coupler 24 may be assembled to connect the optical probe 146 to the other optical system component(s) 148. This may also be useful where the gas turbine engine 140 is configured with multiple optical probes 146 as shown, for example, in FIG. 13. Here, the optical probes 146 may similarly be arranged with the gas turbine engine 140 and then plugged into a harness for the optical system components 148.

Referring to FIGS. 12 and 13, the optical system 20 also include a cooling and/or purge fluid source 150. This fluid source 150 may be fluidly coupled with each optical probe 146 (and/or another downstream device or structure) through the conduits 22 and their fluid passages 44 (see FIG. 2) as well as the conduit coupler 24 and its ports 72 (see FIG. 2). Working fluid (e.g., cooling and/or purge fluid) may thereby be provided to form an insulative shield along the conduits 22 and their optical fibers 32 and 34 (see FIG. 2). The working fluid may also be injected out from the respective optical probe 146 to facilitate cooling of a tip of that optical probe 146 and/or purging debris away from the probe tip. Examples of the working fluid include, but are not limited to, cool dry air, nitrogen (N₂) gas, argon (Ar) gas or another inert gas.

The fluid source 150 may be configured as or otherwise includes a cooling and/or purge fluid reservoir 152 (e.g., a tank, a pressure vessel, etc.) and/or a cooling and/or purge fluid flow regulator 154 (e.g., a valve). The reservoir 152 is configured to contain the working fluid. The flow regulator 154 is configured to selectively direct (e.g., flow, meter, etc.) the working fluid from the reservoir 152 to the conduits 22 and their fluid passages 44 (see FIG. 2).

The optical system 20 may be arranged with various turbine engines as well as in other types of rotational equipment. The optical system 20, for example, may be arranged with a geared turbine engine where a geartrain connects one or more shafts to one or more rotors in a fan section, a compressor section and/or any other engine section. Alternatively, the optical system 20 may be arranged with a turbine engine configured without a geartrain; e.g., a direct drive turbine engine. The optical system 20 may be arranged with a turbine engine configured with a single spool or with two or more spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU) or an industrial gas turbine engine. The present disclosure therefore is not limited to any particular types or configurations of turbine engines or rotational equipment.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An optical system (20), comprising:
a first conduit (22A) including a first optics line (28A) and a first fluid passage (44A) extending longitudinally along the first optics line (28A);
a second conduit (22B) including a second optics line (28B) and a second fluid passage (44B) extending longitudinally along the second optics line (28B); and
a conduit coupler (24) removably connecting the first conduit (22A) to the second conduit (22B) at an interface within the conduit coupler (24), the first optics line (28A) optically coupled to the second optics line (28B) at the interface, and the first fluid passage (44A) fluidly coupled with the second fluid passage (44B) at the interface.

2. The optical system (20) of claim 1, wherein
the first optics line (28A) comprises a plurality of first optical fibers (32A, 34A);
the second optics line (28B) comprises a plurality of second optical fibers (32B, 34B) and
each of the plurality of first optical fibers (32A, 34A) is optically coupled to a respective one of the plurality of second optical fibers (32B, 34B) at the interface.

3. The optical system (20) of claim 2, wherein the conduit coupler (24) is configured to align an end of each of the plurality of first optical fibers (32A, 34A) to an end of the respective one of the plurality of second optical fibers (32B, 34B) at the interface.

4. The optical system (20) of claim 2 or 3, wherein
the first optics line (28A) further comprises a first optical sheath (40A) circumscribing and extending longitudinally along the plurality of first optical fibers (32A, 34A), and the first optical sheath (40A) is between the plurality of first optical fibers (32A, 34A) and the first fluid passage (44A); and
the second optics line (28B) further comprising a second optical sheath (40B) circumscribing and extending longitudinally along the plurality of second optical fibers (32B, 34B), and the second optical sheath (40B) is between the plurality of second optical fibers (32B, 34B) and the second fluid passage (44B).

5. The optical system (20) of any preceding claim, wherein
the first fluid passage (44A) circumscribes the first optics line (28A); and
the second fluid passage (44B) circumscribes the second optics line (28B).

6. The optical system (20) of any preceding claim, wherein
the conduit coupler (24) includes a first connector (46A) and a second connector (46B) longitudinally adjacent the first connector (46A);
the first optics line (28A) is mated with the first connector (46A), and the first connector (46A) includes a first port (72) fluidly coupled with the first fluid passage (44A);
the second optics line (28B) is mated with the second connector (46B), and the second connector (46B) includes a second port (72) fluidly coupled with the second fluid passage (44B); and
the first fluid passage (44A) is fluidly coupled to the second fluid passage (44B) sequentially through the first port (72) and the second port (72).

7. The optical system (20) of claim 6, wherein
the first port (72) is one of a plurality of first ports (72) in the first connector (46A) and fluidly coupled with the first fluid passage (44A);
the second port (72) is one of a plurality of second ports (72) in the second connector (46B) and fluidly coupled with the second fluid passage (44B); and
the conduit coupler (24) is configured to align each of the plurality of first ports (72) with a respective one of the plurality of second ports (72) at the interface.

8. The optical system (20) of claim 7, wherein
the first optics line (28A) projects longitudinally into a first bore (70) of the first connector (46A), and the plurality of first ports (72) are arranged circumferentially about the first bore (70); and
the second optics line (28B) projects longitudinally into a second bore (70) of the second connector (46B), and the plurality of second ports (72) are arranged circumferentially about the second bore (70).

9. The optical system (20) of claim 6, 7 or 8, wherein
the first conduit (22A) further includes a first fluid tube (30A) forming an outer periphery of the first fluid passage (44A), the first optics line (28A) projects longitudinally out of the first fluid tube (30A) and into a or the first bore (70) of the first connector (46A), and the first fluid tube (30A) projects longitudinally into a first counterbore (80) of the first connector (46A); and
the second conduit (22B) further includes a second fluid tube (30B) forming an outer periphery of the second fluid passage (44B), the second optics line (28B) projects longitudinally out of the second fluid tube (30B) and into a or the second bore (70) of the second connector (46B), and the second fluid tube (30B) projects longitudinally into a second counterbore (80) of the second connector (46B).

10. The optical system (20) of any of claims 6 to 9, wherein
the first conduit (22A) is bonded to the first connector (46A), and the second conduit (22B) is bonded to the second connector (46B); and/or
the first connector (46A) and the second connector (46B) are rotationally fixed within the conduit coupler (24).

11. The optical system (20) of any of claims 6 to 10, wherein the conduit coupler (24) further includes a seal element (132) engaged with and longitudinally between the first connector (46A) and the second connector (46B).

12. The optical system (20) of any of claims 6 to 11, wherein
the first connector (46A) includes a first connector groove (82);
the second connector (46B) includes a second connector groove (82); and
the conduit coupler (24) further includes a key (52) arranged in the first connector groove (82) and the second connector groove (82).

13. The optical system (20) of claim 12, wherein
the conduit coupler (24) further includes an insert (48) and a nut (50) threaded onto the insert (48);
the first optics line (28A) projects into the insert (48);
the second optics line (28B) projects through an endwall (118) of the nut (50) and into the insert (48); and
the insert (48) includes an insert groove (106), and the key (52) is further arranged in the insert groove (106).

14. The optical system (20) of any preceding claim, further comprising:
an optical probe (146) comprising one of the first optics line (28A) or the second optics line (28B); and
a fluid source (150) fluidly coupled to the optical probe (146) through at least one of the first fluid passage (44A) or the second fluid passage (44B).

15. The optical system (20) of any preceding claim, further comprising:
a light source optically coupled to the first optics line (28A) or the second optics line (28B); and/or
a light sensor optically coupled to one of the first optics line (28A) or the second optics line (28B).
